# EUROPEAN PATENT APPLICATION

(11) **EP 4 819 448 A1**
(43) Date of publication of application: **07.10.2026**
(21) Application number: 26165766.2
(22) Date of filing: 18.03.2026
(51) Int. Cl.: H02K 3/28

(54) **CONTINUOUS WINDING ASSEMBLY**

(30) Priority: 04.04.2025 KR 20250044016
(71) Applicant: Hyundai Mobis Co., Ltd., Gangnam-gu Seoul 06141 (KR)
(72) Inventor: LEE, Jae Min, 16891 Yongin-si, Gyeonggi-do (KR)
(74) Representative: Jung, Minkyu

(57) **Abstract**

In a continuous winding assembly wound around a motor stator, each of windings between parallel circuits that are connected to form a series winding may have a specific pitch and shape to satisfy back electromotive force and inductance balance, and at the same time, the wires to be connected can be positioned in the same phase to be welded together without twisting, thereby easily forming the series winding without a terminal assembly.

## Description

### BACKGROUND OF THE DISCLOSURE

### Field of the Disclosure

The present disclosure relates to a continuous winding assembly, and more specifically, to a continuous winding assembly wound around a motor stator.

### Description of the Related Art

In motor design, the application of an edgewise winding maximizes a slot space factor, enabling motor miniaturization. When the edgewise winding is inserted into a slot, unlike a round wire winding, a layer structure is formed, and the inductance varies from layer to layer. In addition, since a back electromotive force (EMF) phase differs from slot to slot, when a parallel circuit is applied, a balanced winding layout design is essential to eliminate inductance differences between parallel paths and phase differences in the back EMF. When this imbalance occurs, circulating currents can be generated, leading to motor overheating. Accordingly, the rules for coil arrangement in slots and layers have been very restrictive.

Continuous windings, like hairpin windings, require winding layout that considers inductance balance and back-EMF phase balance, but the hairpin winding needs to be disposed at the same pitch due to constraints of a welded joint, while the continuous winding has the advantage of having no welded joint, thereby providing greater layout flexibility for the pitch on both sides of a crown portion. However, the flexibility can also increase design complexity. In particular, when a terminal assembly is required, an increase in material cost, the number of welding operations, and process complexity may result in disadvantages in terms of cost and quality.

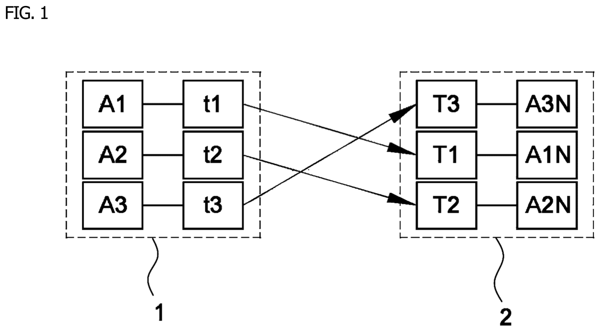

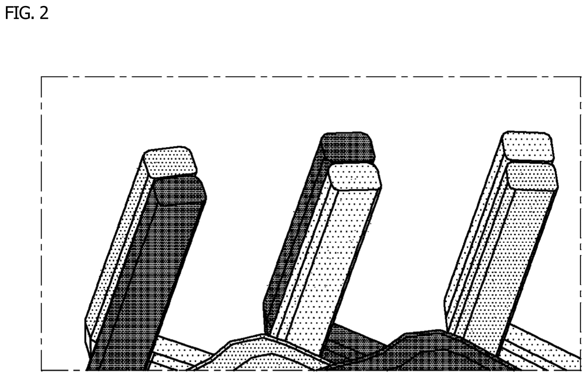

In addition, when windings are connected between parallel circuits to form a series winding using continuous windings, as illustrated in FIGS. 1 and 2, there were cases in which the connection structure of the first winding 1 and second winding 2 between parallel circuits was misaligned to maintain back EMF and inductance balance. That is, as illustrated in FIG. 2, since windings of the same phase (indicated by the same color) need to be electrically connected in the arranged state, a terminal assembly was required to implement such connections.

### Documents of Related Art

(Patent Document 1) U.S. patent No. 7269888 "Method of making cascaded multilayer stator winding with interleaved transitions"

### SUMMARY OF THE DISCLOSURE

The present disclosure is directed to providing a continuous winding assembly in which each of windings between parallel circuits that are connected to form a series winding has a specific pitch and shape to satisfy back electromotive force and inductance balance, and at the same time, wires to be connected are positioned in the same phase to be welded together without twisting, thereby easily forming a series winding without a terminal assembly.

According to an embodiment of the present disclosure, there is provided a continuous winding assembly applied to a stator including, for each pole of a rotor, one predetermined slot group including a plurality of slots arranged adjacent to and continuously positioned with respect to the pole of the rotor, which includes a first winding unit including a plurality of windings, which extend in a circumferential direction of the stator, each of which is inserted into a corresponding slot included in the slot group and wound therein, and which are provided in parallel, and a second winding unit electrically connected to the first winding unit and including a plurality of windings, which extend in the circumferential direction of the stator, each of which is inserted into a corresponding slot included in the slot group and wound therein, and which are provided in parallel, wherein each of the windings of the first winding unit and each of the windings of the second winding unit are connected in a one-to-one manner and are connected in direct contact with each other, each of the windings is inserted into the slot in multiple layers in a radial direction and includes a plurality of slot insertion portions inserted into the slots and extending in the axial direction of the motor and a jump portion provided between the slot insertion portions and extending by a predetermined pitch, and in each of the multiple layers, at least any one of the windings included in the first winding unit has a jump portion having a standard pitch, and at least any one of the windings included in the second winding unit has the jump portion having the standard pitch.

An end of the second winding unit may be inserted into the slot group adjacent to the slot group into which an end of the winding of the first winding unit is inserted.

The winding may include at least two single-layer parts wound on one layer, and each of the single-layer parts may include the slot insertion portion inserted into each of the slot groups adjacent to all the poles and at least one layer jump part provided between two or more single-layer parts and crossing the two or more layers.

When the standard pitch is x, the jump portions included in the first winding unit and the second winding unit may have any one pitch value selected from pitches of x, x-1, and x+1, and each of the single layer parts may be formed only of the jump portion having the pitch of x or by alternating the jump portions having pitches of x-1 and x+1.

When the standard pitch is x, the layer jump parts included in the first winding unit and the second winding unit may have any one pitch value selected from pitches of x, x-1, and x+1.

The total number of layers in which the first winding unit and the second winding unit are wound may be a multiple of 3.

The number N1 of layer jump parts included in each of the windings of the first winding unit and the number N2 of layer jump parts included in each of the windings of the second winding unit may follow Equation below: Equation: $N 1 = p \left(k-1\right) , N 2 = q \left(m-k-1\right)$
(where N1: the number of layer jump parts of the windings of the first winding unit, N2: the number of layer jump parts of the windings of the second winding unit, p, q: constants (integers greater than or equal to 1), m: total number of layers (multiples of 3), k: number of odd-numbered layers in a radial direction).

When the total number of poles of a motor is S, the layer jump part may be formed between a slot insertion portion at which each of the windings is wound at an nS-th turn and a slot insertion portion at which each of the windings is wound at an nS+1-th turn (n is a natural number).

The single-layer part of the first winding unit may be wound on an odd-numbered layer in a radial direction, and the single-layer part of the second winding unit may be wound on an even-numbered layer in the radial direction.

The layer jump parts of the first winding unit and the second winding unit may pass through odd-numbered or even-numbered layers in a radial direction.

### BRIEF DESCRIPTION OF THE DRAWINGS

FIG. 1 is a schematic view illustrating a winding configuration and its connection relationship according to the related art.
FIG. 2 is a partial perspective view illustrating a winding-to-winding coupling relationship according to the related art.
FIG. 3 is a schematic view illustrating a winding configuration and its connection relationship according to the present disclosure.
FIG. 4 is a partial plan view illustrating layers of a winding of the present disclosure.
FIG. 5 is a schematic view illustrating a portion of the arrangement of a first winding unit of the present disclosure.
FIG. 6 is a schematic view illustrating a layer jump part crossing first and third layers of the first winding unit of the present disclosure.
FIG. 7 is a schematic view illustrating a layer jump part crossing the third layer and a fifth layer of the first winding unit of the present disclosure.
FIG. 8 is a schematic view illustrating the arrangement of a second winding unit of the present disclosure.
FIG. 9 is a schematic view illustrating a layer jump part crossing second and fourth layers of the second winding unit of the present disclosure.
FIG. 10 is a schematic diagram illustrating a layer jump part crossing the fourth layer and a sixth layer of the second winding unit of the present disclosure.

### DETAILED DESCRIPTION OF THE DISCLOSURE

Hereinafter, the technical spirit of the present disclosure will be described in more detail with reference to the accompanying drawings. Prior to the description, terms or words used in the present specification and claims should not be interpreted as limited to their usual or dictionary meanings and should be interpreted as meanings and concepts that conform to the technical idea of the present disclosure based on the principle that the inventor can appropriately define the concepts of the terms in order to describe his or her own invention in the best way.

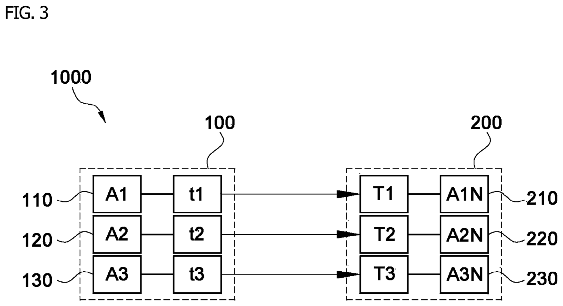

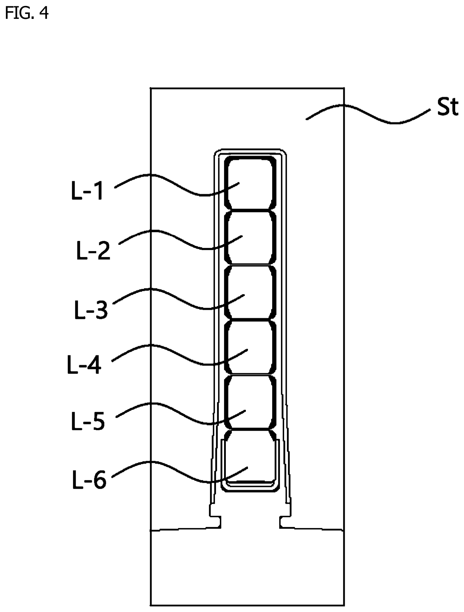

Hereinafter, a basic configuration of a continuous winding assembly 1000 of the present disclosure will be described with reference to FIGS. 3 and 4.

The continuous winding assembly 1000 of the present disclosure is applied to a stator St including, for each pole of a rotor, one predetermined slot group Sg including a plurality of slots arranged adjacent to and continuously positioned with respect to the pole of the rotor, and as illustrated in FIG. 3, may include a first winding unit 100 and a second winding unit 200. More specifically, the first winding unit 100 may include a plurality of windings 110, 120, and 130, which extend in a circumferential direction of the stator St and each of which is inserted into a corresponding slot included in the slot group Sg and wound therein, and the second winding unit 200 may be electrically connected to the first winding unit 100, may include a plurality of windings 210, 220, and 230, which extend in the circumferential direction of the stator St, and each of which is inserted into a corresponding slot included in the slot group Sg and wound therein.

In this case, an end of the second winding unit 200 may be inserted into a slot group Sg adjacent to the slot group Sg into which an end of a winding of the first winding unit 100 is inserted, and an end of the first winding unit 100 and the end of the second winding unit 200 may be electrically connected by welding. In this case, each winding included in the first winding unit 100 and each winding included in the second winding unit 200 may be connected to each other in a one-to-one manner and connected directly. That is, the windings may be directly connected to each other without a terminal assembly, thereby increasing manufacturing convenience.

In addition, each winding included in the first winding unit 100 and the second winding unit 200 may be inserted into the slot in multiple layers radially, and each winding included in the first winding unit 100 and the second winding unit 200 may include multiple slot insertion portions 300 and multiple jump portions 400. More specifically, the slot insertion portions 300 may be inserted into the slots and may extend in an axial direction of a motor, and the jump portions 400 may be provided between the slot insertion portions 300 and formed to extend by a predetermined pitch. In this case, within each layer, at least one of the parallel windings included in the first winding unit 100 may have a jump portion 400 formed with a standard pitch, and the other parallel windings may have jump portions 400 formed with a non-standard pitch within the same layer. Even in the second winding unit 200, within each layer, at least one of the parallel windings may have a jump portion 400 formed with a standard pitch, and the other parallel windings may have jump portions 400 formed with a non-standard pitch within the same layer. By forming each parallel winding in this manner, the pitch of each jump portion may be regular, thereby increasing the convenience of manufacturing each winding.

In addition, the number of layers of wires stacked in the slot may be a multiple of three from an innermost side of the slot. For example, as illustrated in FIG. 4, six layers may be provided. In the following description, each layer is referred to as a first layer L-1, a second layer L-2, a third layer L-3, a fourth layer L-4, a fifth layer L-5, and a sixth layer L-6. In addition, the slot group Sg may be composed of three consecutive slots and may include an X-th slot S-X provided at one edge among the slots, a Y-th slot S-Y located at the center among the slot, and a Z-th slot S-Z located at the other edge among the slots.

In addition, each of the windings included in the first winding unit 100 and the second winding unit 200 may include at least two single-layer parts 500 wound on one layer. The single-layer winding unit may include one slot insertion portion 300 inserted per slot group Sg adjacent to each pole. More specifically, the pitch of the jump portion 400 of the windings arranged in parallel may have any one pitch value selected from pitches of (x-1), x, and (x+1), when the standard pitch is x. For example, when the standard pitch is 9, the pitch of the jump portion 400 may be any one selected from pitches of 8, 9 (standard pitch), and 10. In this case, one single-layer part 500 included in each winding may be formed only of a jump portion 400 having the pitch of x or formed by alternating jump portions 400 having the pitches of (x-1) and (x+1). More preferably, when the number of layers is 6 and one winding includes three single-layer parts 500, one of the three single-layer parts 500 included in one winding may be formed only of the jump portion 400 having the pitch of x, and the remaining two single-layer parts 500 may be formed by alternating the jump portion 400 having the pitch of (x-1) and the jump portion 400 having the pitch of (x+1).

In addition, each winding included in the first winding unit 100 and the second winding unit 200 may include at least one layer jump part 600 provided between two or more single-layer parts 500 and crossing two or more layers. The windings of the jump portion 400 included in the layer jump part 600 may intersect with each other. The pitch of the layer jump part 600 may have any one pitch value selected from the pitches of x, (x-1), and (x+1), when the standard pitch is x. For example, when the standard pitch is 9, the pitch of the jump portion 400 may be any one selected from pitches of 8, 9 (standard pitch), and 10. Accordingly, even when the jump portion 400 of the single-layer part 500 is formed by mixing standard-pitch and non-standard-pitch as described above, the ends of the first winding unit 100 and the second winding unit 200, which are connected to each other, may be disposed on the same phase of adjacent slot groups Sg. For example, a t1 end of a first wire 110 of the first winding unit 100 and a T1 end of a fourth wire 210 of the second winding unit 200, which are connected to each other, may be wound on the same phase of adjacent slot groups Sg, for example, the Y-th slots S-Y.

In addition, the single-layer part 500 of the first winding unit 100 may be wound on odd-numbered layers in a radial direction. That is, when six layers are provided in the radial direction, the single-layer part 500 of each parallel winding of the first winding unit 100 may be wound on the first layer L-1, the third layer L-3, and the fifth layer L-5. In addition the single-layer part 500 of the second winding unit 200 may be wound on even-numbered layers in the radial direction. That is, when six layers are provided in the radial direction, the single-layer part 500 of each parallel winding of the second winding unit 200 may be wound on the second layer L-2, the fourth layer L-4, and the sixth layer L-6.

In this case, the layer jump parts 600 included in the first winding unit 100 and the second winding unit 200 may be provided to pass through at least one of the odd-numbered or even-numbered layers, regardless of the odd-numbered and even-numbered layers. For example, the layer jump part 600 connecting the single-layer part 500 in the first layer L-1 and the single-layer part 500 in the third layer L-3 of the first winding unit 100 may be formed to pass through the second layer L-2 disposed between the first layer L-1 and the third layer L-3, in addition to the first layer L-1 and the third layer L-3.

In addition, the number N1 of layer jump parts 600 included in each parallel winding included in the first winding unit 100 may follow Equation 1 below. Equation 1: $N 1 = p \left(k-1\right)$
where N1 denotes the number of layer jump parts 600 in the windings of the first winding unit 100, p denotes a constant (an integer greater than or equal to 1), and k denotes the number of odd-numbered layers in the radial direction. That is, when p is 1, a single continuous single-layer part 500 includes slot insertion portions 300 corresponding to all poles in the circumferential direction, and when p is 2 or greater, a single continuous single-layer part 500 includes slot insertion portions 300 corresponding to only some poles in the circumferential direction (e.g., windings are only applied to 1/2 or 1/4 of a circumferential region of a motor) such that the layer jump parts 600 are provided more densely.

In addition, the number N2 of layer jump parts 600 included in each parallel winding included in the second winding unit 200 may follow Equation 2 below. Equation 2: $N 2 = q \left(m-k-1\right)$
where N2 denotes the number of layer jump parts 600 in the windings of the second winding unit 200, q denotes a constant (an integer greater than or equal to 1), m denotes the total number of layers (a multiple of 3), and k denotes the number of odd-numbered layers in the radial direction. That is, when q is 1, a single continuous single-layer part 500 includes slot insertion portions 300 corresponding to all poles in the circumferential direction, and when q is 2 or greater, a single continuous single-layer part 500 includes slot insertion portions 300 corresponding to only some poles in the circumferential direction (e.g., windings are only applied to 1/2 or 1/4 of a circumferential region of a motor) such that the layer jump parts 600 are provided more densely.

In addition, when the total number of poles of the motor is S, the layer jump part 600 may be formed between a slot insertion portion 300 at which each winding is wound at an nS-th turn and a slot insertion portion 300 at which each winding is wound at an nS+1-th turn. In this case, n denotes a natural number. More specifically, when the total number of poles of the motor is 8, the layer jump part 600 may be provided between a slot insertion portion 300 at which each winding is wound at every multiple of eight (e.g., the 8th, 16th, 24th, ...) and an adjacent slot insertion portion 300 at which each winding is wound at the 9th, 17th, 25th, .. turns.

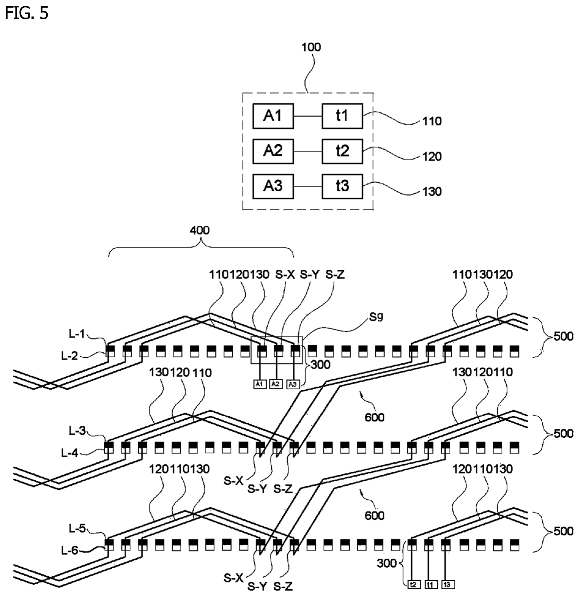

Hereinafter, an example of the first winding unit 100 of the present disclosure will be described in more detail with reference to FIGS. 5 to 7.

An embodiment of the present disclosure applied to a motor having 8 poles, 6 radial layers of windings, and the standard pitch of 9-pitch will be described. As illustrated in FIG. 5, the first winding unit 100 may include the first wire 110, the second wire 120, and the third wire 130 wound in parallel with each other. The first wire 110, the second wire 120, and the third wire 130 may each be wound three times around the stator St in the circumferential direction and wound on the first layer L-1, the third layer L-3, and the fifth layer L-5, respectively.

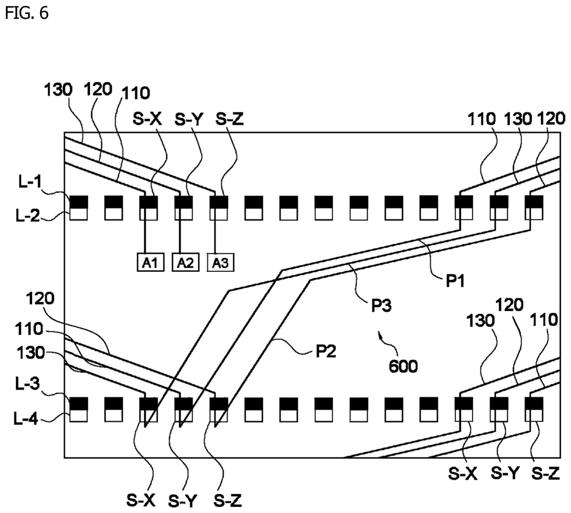

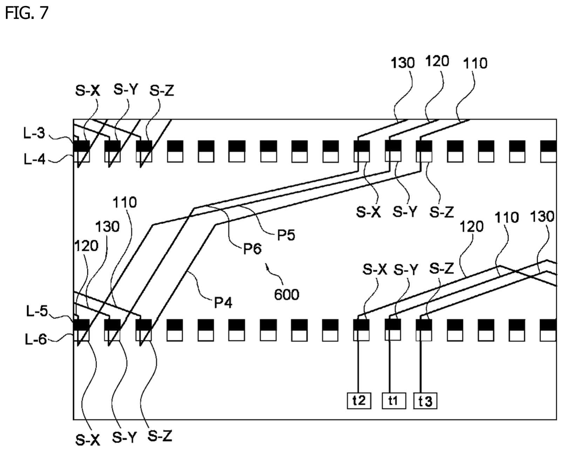

In addition, the pitch of the layer jump part 600 of the windings included in the first winding unit 100 may be selected from any one of 8-pitch, 9-pitch, and 10-pitch. For example, as illustrated in FIG. 6, a pitch P1 of the layer jump part 600 of the first wire 110 crossing the first layer L-1 and the third layer L-3 may be 8, a pitch P2 of the layer jump part 600 of the second wire 120 may be 9, and a pitch P3 of the layer jump part 600 of the third wire 130 may be 10. In addition, as illustrated in FIG. 7, a pitch P4 of the layer jump part 600 of the first wire 110 crossing the third layer L-3 and the fifth layer L-5 may be 9, a pitch P5 of the layer jump part 600 of the second wire 120 may be 10, and a pitch P6 of the layer jump part 600 of the third wire 130 may be 8.

More specifically, the first wire 110 of the first winding unit 100 may be configured such that, in the first layer L-1, the jump portions 400 included in the single-layer part 500 are arranged at the standard pitch of 9, and the slot insertion portions 300 at one end of the first wire 110 are all inserted into the X-th slots S-X; in the third layer L-3, the jump portions 400 included in the single-layer part 500 are formed to alternately have pitches of 8 and 10, and the slot insertion portion 300 in contact with the layer jump part 600 extending from the first layer L-1 is inserted into the Y-th slot S-Y and then alternately inserted into the Z-th slot S-Z and the Y-th slot S-Y; in the fifth layer L-5, the jump portions 400 included in the single-layer part 500 are formed to alternately have pitches of 8 and 10, and the slot insertion portion 300 in contact with the layer jump part 600 extending from the third layer L-3 is inserted into the Z-th slot S-Z and then alternately inserted into the Y-th slot S-Y and the Z-th slot S-Z; and the slot insertion portion 300 at the other end of the first wire 110 is inserted into the Y-th slot S-Y.

In addition, the second wire 120 of the first winding unit 100 may be configured such that, in the first layer L-1, the jump portions 400 included in the single-layer part 500 are formed to alternately have pitches of 8 and 10, and the slot insertion portions 300 at one end are inserted into the Y-th slots S-Y and then alternately inserted into the Z-th slots S-Z and the Y-th slots S-Y; in the third layer L-3, the jump portions 400 included in the single-layer part 500 are formed to alternately have pitches of 8 and 10, and the slot insertion portion 300 in contact with the layer jump part 600 extending from the first layer L-1 is inserted into the Z-th slot S-Z and then alternately inserted into the Y-th slot S-Y and the Z-th slot S-Z; and in the fifth layer L-5, the jump portions 400 included in the single-layer part 500 are formed to have the standard pitch of 9, and all of the slot insertion portions 300 in the fifth layer L-5 that are in contact with the layer jump part 600 extending from the third layer L-3 are inserted into the X-th slots S-X. That is, the slot insertion portion 300 at the other end of the second wire 120 may be inserted into the X-th slot S-X.

In addition, the third wire 130 of the first winding unit 100 may be configured such that, in the first layer L-1, the jump portions 400 included in the single-layer part 500 are formed to alternately have pitches of 8 and 10, and the slot insertion portions 300 at one end are inserted into the Z-th slots S-Z and then alternately inserted into the Y-th slots S-Y and the Z-th slots S-Z; in the third layer L-3, the jump portion 400 included in the single-layer part 500 is formed to have the standard pitch, and all of the slot insertion portions 300 in the third layer L-3 that are in contact with the layer jump part 600 extending from the first layer L-1 are inserted into the X-th slots S-X; in the fifth layer L-5, the jump portions 400 included in the single-layer part 500 are formed to alternately have pitches of 8 and 10, and the slot insertion portions 300 in contact with the layer jump part 600 extending from the third layer L-3 are inserted into the Y-th slots S-Y and then alternately inserted into the Z-th slots S-Z and the Y-th slots S-Y; and the slot insertion portions 300 at the other end of the third wire 130 are inserted into the Z-th slots S-Z.

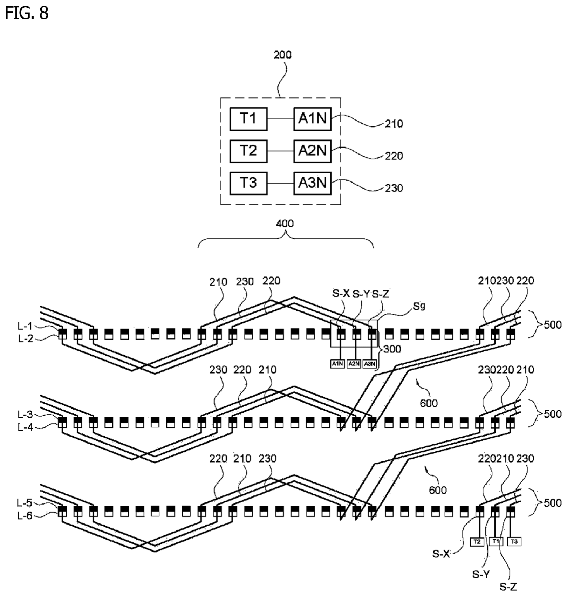

Hereinafter, an example of the second winding unit 200 of the present disclosure will be described in more detail with reference to FIGS. 8 to 10.

An embodiment of the present disclosure applied to a motor having 8 poles, 6 radial layers of windings, and the standard pitch of 9-pitch will be described. As illustrated in FIG. 8, the second winding unit 200 may include a fourth wire 210, a fifth wire 220, and a sixth wire 230 wound in parallel with each other. The fourth wire 210, the fifth wire 220, and the sixth wire 230 may be wound three times around the stator St in the circumferential direction and wound on the second layer L-2, the fourth layer L-4, and the sixth layer L-6, respectively.

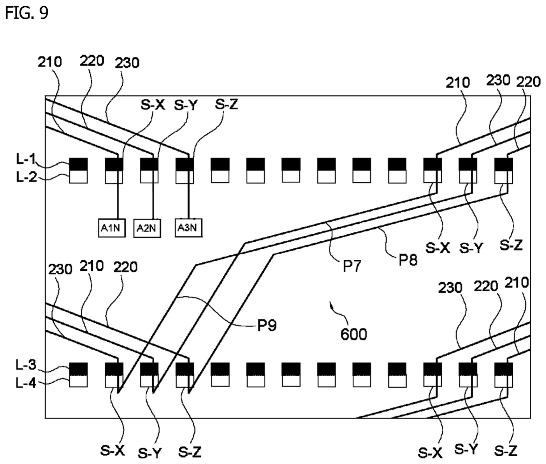

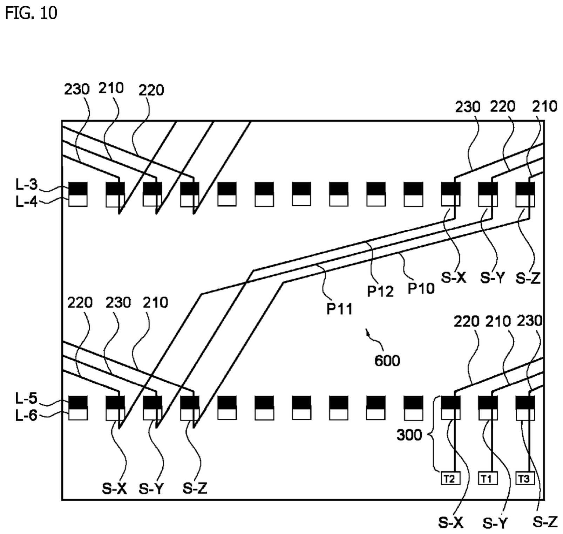

In addition, the pitch of the layer jump part 600 of the windings included in the second winding unit 200 may be selected from any one of pitches of 8, 9, and 10. For example, as illustrated in FIG. 9, a pitch P7 of the layer jump part 600 of the fourth wire 210 crossing the second layer L-2 and the fourth layer L-4 may be 8, a pitch P8 of the layer jump part 600 of the fifth wire 220 may be 9, and a pitch P9 of the layer jump part 600 of the sixth wire 230 may be 10. In addition, as illustrated in FIG. 10, a pitch P10 of the layer jump part 600 of the fourth wire 210 crossing the fourth layer L-4 and the sixth layer L-6 may be 9, a pitch P11 of the layer jump part 600 of the fifth wire 220 may be 10, and a pitch P12 of the layer jump part 600 of the sixth wire 230 may be 8.

More specifically, the fourth wire 210 of the second winding unit 200 may be configured such that, in the second layer L-2, the jump portions 400 included in the single-layer part 500 are formed to have the standard pitch of 9; in the second layer L-2, the slot insertion portions 300 at one end of the fourth wire 210 are all inserted into the X-th slots S-X; in the fourth layer L-4, the jump portions 400 included in the single-layer part 500 are formed to alternately have pitches of 8 and 10, and the slot insertion portions 300 in contact with the layer jump part 600 extending from the second layer L-2 are inserted into the Y-th slots S-Y and then alternately inserted into the Z-th slots S-Z and the Y-th slots S-Y; in the sixth layer L-6, the jump portions 400 included in the single-layer part 500 are formed to alternately have pitches of 8 and 10, and the slot insertion portions 300 in contact with the layer jump part 600 extending from the fourth layer L-4 are inserted into the Z-th slots S-Z and then alternately inserted into the Y-th slots S-Y and the Z-th slots S-Z; and the slot insertion portions 300 at the other end of the fourth wire 210 are inserted into the Y-th slots S-Y.

In addition, the fifth wire 220 of the second winding unit 200 may be configured such that, in the second layer L-2, the jump portions 400 included in the single-layer part 500 are formed to alternately have pitches of 8 and 10, and the slot insertion portions 300 at one end are inserted into the Y-th slots S-Y and then alternately inserted into the Z-th slots S-Z and the Y-th slots S-Y; in the fourth layer L-4, the jump portions 400 included in the single-layer part 500 are formed to alternately have pitches of 8 and 10, and the slot insertion portions 300 in contact with the layer jump part 600 extending from the second layer L-2 are inserted into the Z-th slots S-Z and then alternately inserted into the Y-th slots S-Y and the Z-th slots S-Z; and in the sixth layer L-6, the jump portions 400 included in the single-layer part 500 are formed to have the standard pitch of 9, and all of the slot insertion portions 300 in the sixth layer L-6 that are in contact with the layer jump part 600 extending from the fourth layer L-4 are inserted into the X-th slots S-X. That is, the slot insertion portions 300 at the other end of the fifth wire 220 may be inserted into the X-th slots S-X.

In addition, the sixth wire 230 of the second winding unit 200 may be configured such that, in the second layer L-2, the jump portions 400 included in the single-layer part 500 are formed to alternately have pitches of 8 and 10, and the slot insertion portions 300 at one end are inserted into the Z-th slots S-Z and then alternately inserted into the Y-th slots S-Y and the Z-th slots S-Z; in the fourth layer L-4, the jump portions 400 included in the single-layer part 500 are formed to have the standard pitch, and all of the slot insertion portions 300 in the fourth layer L-4 that are in contact with the layer jump part 600 extending from the second layer L-2 are inserted into the X-th slots S-X; in the sixth layer L-6, the jump portions 400 included in the single-layer part 500 are formed to alternately have pitches of 8 and 10, and the slot insertion portions 300 in contact with the layer jump part 600 extending from the fourth layer L-4 are inserted into the Y-th slots S-Y and then alternately inserted into the Z-th slots S-Z and the Y-th slots S-Y; and the slot insertion portions 300 at the other end of the the sixth wire 230 may be inserted into the Z-th slots S-Z.

Hereinafter, a coupling relationship between the first winding unit 100 and the second winding unit 200 of the present disclosure will be described in more detail.

When analyzing the back electromotive force phase and inductance balance in the above arrangement of the first winding unit 100 and the second winding unit 200, in the case of the first wire 110 and the fourth wire 210 that are connected to each other, the number of slots in which the first wire 110 is wound is 8 in all of the first layer L-1, the third layer L-3, and the fifth layer L-5, and the number of slots in which the fourth wire 210 is wound is 8 in all of the second layer L-2, the fourth layer L-4, and the sixth layer L-6, and thus it can be confirmed that the inductance phase is balanced. In addition, it can be confirmed that the first wire 110 is wound 8 times in the X slot S-X in the first layer L-1, 4 times in the Y slot S-Y and the Z slot S-Z in the third layer L-3 and the fifth layer L-5, and the fourth wire 210 is wound 8 times in the X slot S-X in the second layer L-2, and 4 times in the Y slot S-Y and the Z slot S-Z in the fourth layer L-4 and the sixth layer L-6. Accordingly, it was confirmed that the sum of the number of windings wound in the X slot S-X, the Y slot S-Y, and the Z slot S-Z of the series-connected winding composed of the first wire 110 and the fourth wire 210 was 16 and thus the back electromotive force phase was also balanced.

In addition, it can be confirmed that in the case of the second wire 120 and the fifth wire 220 that are connected to each other, the number of slots in which the second wire 120 is wound is 8 in all of the first layer L-1, the third layer L-3, and the fifth layer L-5, and the number of slots in which the fifth wire 220 is wound is 8 in all of the second layer L-2, the fourth layer L-4, and the sixth layer L-6 and thus the inductance phase is balanced. In addition, it can be confirmed that the second wire 120 is wound 4 times each in the Y slot S-Y and the Z slot S-Z in the first layer L-1 and the third layer L-3, and 8 times in the X slot S-X in the fifth layer L-5, and the fifth wire 220 is wound 4 times each in the Y slot S-Y and the Z slot S-Z in the second layer L-2 and the fourth layer L-4, and 8 times in the X slot S-X in the sixth layer L-6. Accordingly, it was confirmed that the sum of the number of windings wound in the X slot S-X, the Y slot S-Y, and the Z slot S-Z of the series-connected winding composed of the second wire 120 and the fifth wire 220 was 16 and thus the back electromotive force phase was also balanced.

In addition, it can be confirmed that in the case of the third wire 130 and the sixth wire 230 that are connected to each other, the number of slots in which the third wire 130 is wound is 8 in all of the first layer L-1, the third layer L-3, and the fifth layer L-5, and the number of slots in which the sixth wire 230 is wound is 8 in all of the second layer L-2, the fourth layer L-4, and the sixth layer L-6 and thus the inductance phase is balanced. In addition, it can be confirmed that the third wire 130 is wound 4 times each in the Y slot S-Y and the Z slot S-Z in the first layer L-1 and the fifth layer L-5, and 8 times in the X slot S-X in the third layer L-3, and the sixth wire 230 is wound 4 times each in the Y slot S-Y and the Z slot S-Z in the second layer L-2 and the sixth layer L-6, and 8 times in the X slot S-X in the fourth layer L-4. Accordingly, it was confirmed that the sum of the number of windings wound in the X slot S-X, the Y slot S-Y, and the Z slot S-Z of the series-connected winding composed of the third wire 130 and the sixth wire 230 was 16 and thus the back electromotive force phase was also balanced.

In addition, according to the above arrangement, the other end of the first wire 110 of the first winding unit 100 and the other end of the fourth wire 210 of the second winding unit 200 may be drawn out from the Y-th slots S-Y of adjacent slot groups Sg and coupled to each other; the other end of the second wire 120 of the first winding unit 100 and the other end of the fifth wire 220 of the second winding unit 200 may be drawn out from the X-th slots S-X of adjacent slot groups Sg and coupled to each other; and the other end of the third wire 130 of the first winding unit 100 and the other end of the sixth wire 230 of the second winding unit 200 may be drawn out from the Z-th slots S-Z of adjacent slot groups Sg and coupled to each other. Accordingly, the respective serial connection portions may not be twisted or overlapped with each other, such that the windings may be in direct contact with each other and welded without a terminal assembly.

According to the continuous winding assembly of the present disclosure having the above configuration, the windings between parallel circuits that are connected to form a series winding can have the specific pitch and shape to satisfy back electromotive force and inductance balance, and at the same time, wires to be connected can be positioned in the same phase to be welded together without twisting, thereby easily forming the series winding without a terminal assembly.

The technical spirit of the present disclosure should not be construed as limited to the above-described embodiments. Not only the scope of applications is diverse, but also various modifications may be made by those skilled in the art without departing from the gist of the present disclosure as claimed in the claims. Accordingly, these improvements and changes fall within the scope of the present disclosure as long as they are obvious to those skilled in the art.

### DESCRIPTION OF REFERENCE NUMERALS

1000: continuous winding assembly
100: first winding unit
110: first wire
120: second wire
130: third wire
200: second winding unit
210: fourth wire
220: fifth wire
230: sixth wire
300: slot insertion portion
400: jump portion
500: single-layer part
600: layer jump part
L-1: first layer
L-2: second layer
L-3: third layer
L-4: fourth layer
L-5: fifth layer
L-6: sixth layer
St: stator
Sg: slot group
S-X: X-th slot
S-Y: Y-th slot
S-Z: Z-th slot

## Claims

1. A continuous winding assembly applied to a stator including, for each pole of a rotor, one predetermined slot group including a plurality of slots arranged adjacent to and continuously positioned with respect to the pole of the rotor, the continuous winding assembly comprising:
a first winding unit including a plurality of windings, which extend in a circumferential direction of the stator, wherein each of the plurality of windings in the first winding unit is inserted into a corresponding slot included in the predetermined slot group and wound therein, and the plurality of windings in the first winding unit are disposed in parallel; and
a second winding unit electrically connected to the first winding unit and including a plurality of windings, which extend in the circumferential direction of the stator, wherein each of the plurality of windings in the second winding unit is inserted into a corresponding slot included in the predetermined slot group and wound therein, and the plurality of windings in the second winding unit are disposed in parallel,
wherein each of the plurality of windings of the first winding unit and each of the plurality of windings of the second winding unit are connected in a one-to-one manner and are connected in direct contact with each other,
wherein each winding in the first and second winding units is inserted into the slots in multiple layers in a radial direction and includes a plurality of slot insertion portions inserted into the slots and extending in an axial direction of a motor and a jump portion disposed between the slot insertion portions and extending by a predetermined pitch, and
wherein in each of the multiple layers,
at least any one of the plurality of windings included in the first winding unit has a jump portion having a standard pitch, and
at least any one of the plurality of windings included in the second winding unit has the jump portion having the standard pitch.

2. The continuous winding assembly of claim 1, wherein an end of the second winding unit is inserted into a slot group adjacent to a slot group into which an end of the winding of the first winding unit is inserted.

3. The continuous winding assembly of claim 1 or 2,
wherein each winding in the first and second winding units includes at least two single-layer parts wound on one layer, and
wherein each of the at least two single-layer parts includes a slot insertion portion inserted into each of the slot groups adjacent to all the poles and at least one layer jump part disposed between two or more single-layer parts and crossing two or more layers among the multiple layers.

4. The continuous winding assembly of claim 3, wherein, based on that the standard pitch is x, the jump portions included in the first winding unit and the second winding unit have any one pitch value selected from pitches of x, x-1, and x+ 1, and
each of the single layer parts is formed only of the jump portion having the pitch of x or by alternating the jump portions having pitches of x-1 and x+1.

5. The continuous winding assembly of claim 3, wherein, based on that the standard pitch is x, the jump portions included in the first winding unit and the second winding unit have any one pitch value selected from pitches of x, x-1, and x+1.

6. The continuous winding assembly of any one of claims 3 to 5, wherein a total number of layers in which the first winding unit and the second winding unit are wound is a multiple of 3.

7. The continuous winding assembly of any one of claims 3 to 6, wherein a number N1 of layer jump parts included in each of the plurality of windings of the first winding unit and a number N2 of layer jump parts included in each of the plurality of windings of the second winding unit follow Equation below:
Equation: $N 1 = p \left(k-1\right) , N 2 = q \left(m-k-1\right)$
wherein N1 is the number of layer jump parts of the plurality of windings of the first winding unit, N2 is the number of layer jump parts of the plurality of windings of the second winding unit, p, q are constants (integers greater than or equal to 1), m is total number of layers (multiples of 3), k is number of odd-numbered layers in a radial direction.

8. The continuous winding assembly of any one of claims 3 to 7, wherein, based on that a total number of poles of the motor is S, the at least one layer jump part is formed between a slot insertion portion at which each winding is wound at an nS-th turn and a slot insertion portion at which each winding is wound at an nS+1-th turn, the n being a natural number.

9. The continuous winding assembly of any one of claims 3 to 8,
wherein the single-layer part of the first winding unit is wound on an odd-numbered layer in a radial direction, and
wherein the single-layer part of the second winding unit is wound on an even-numbered layer in the radial direction.

10. The continuous winding assembly of any one of claims 3 to 9, wherein the layer jump parts of the first winding unit and the second winding unit pass through odd-numbered or even-numbered layers in a radial direction.

11. A motor comprising the continuous winding assembly of any one of claims 1 to 10.
